# EUROPEAN PATENT SPECIFICATION

(11) **EP 1 132 735 B1**
(45) Date of publication and mention of the grant of the patent: **30.07.2008**
(21) Application number: 98949865.4
(22) Date of filing: 23.10.1998
(51) Int. Cl.: G01N 29/28, G01N 29/26

(54) **METHOD, TRANSDUCER WHEEL AND FLAW DETECTION SYSTEM FOR ULTRASONIC FLAW DETECTION IN RAILROAD RAILS**
VERFAHREN, TRANSDUCERRAD SOWIE SYSTEM ZUR ULTRASCHALLDETEKTION VON FEHLERN IN EISENBAHNSCHIENEN
DISPOSITIF DE DETECTION D'ANOMALIES, ROUE DE DETECTION ET PROCEDE DE DETECTION A ULTRASONS D'ANOMALIES DANS LES RAILS DE CHEMIN DE FER

(43) Date of publication of application: 12.09.2001
(73) Proprietor: Li, Gang, Beijing 100085 (CN)
(72) Inventor: Li, Gang, Beijing 100085 (CN)
(74) Representative: David, Alain
(86) International application number: PCT/CN1998/000257
(87) International publication number: WO 2000/025126

(56) References cited:
- EP-A- 0 722 085
- CN-A- 1 096 459
- JP-A- 3 183 945
- JP-A- 9 101 288
- US-A- 3 442 119
- US-A- 4 165 648
- US-A- 4 468 966
- US-A- 4 487 071
- US-A- 5 339 692

## Description

### Technical Field

The invention relates to a nondestructive flaw detection method, especially an ultrasonic flaw detection method for detecting rail flaws, as well as the wheel transducer and flaw detection system for implementing the method.

### Background of the Invention

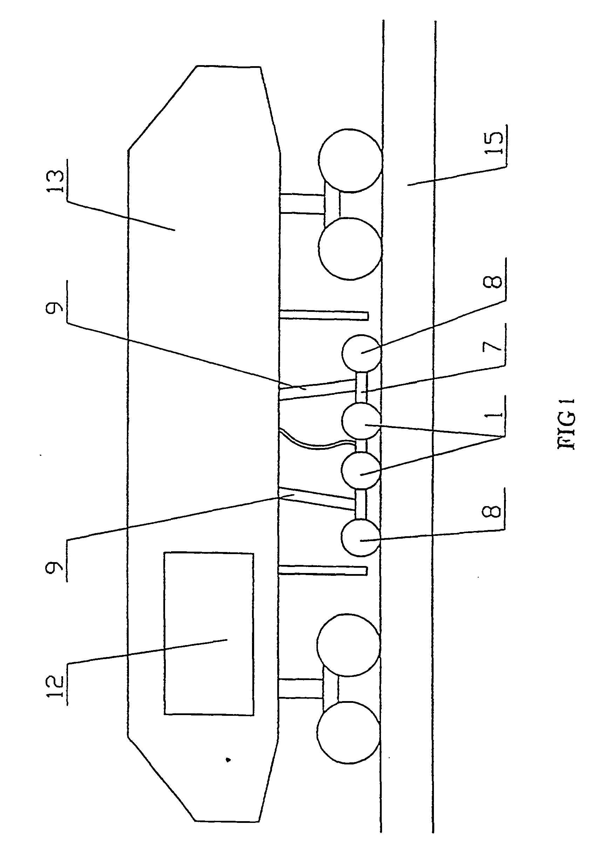

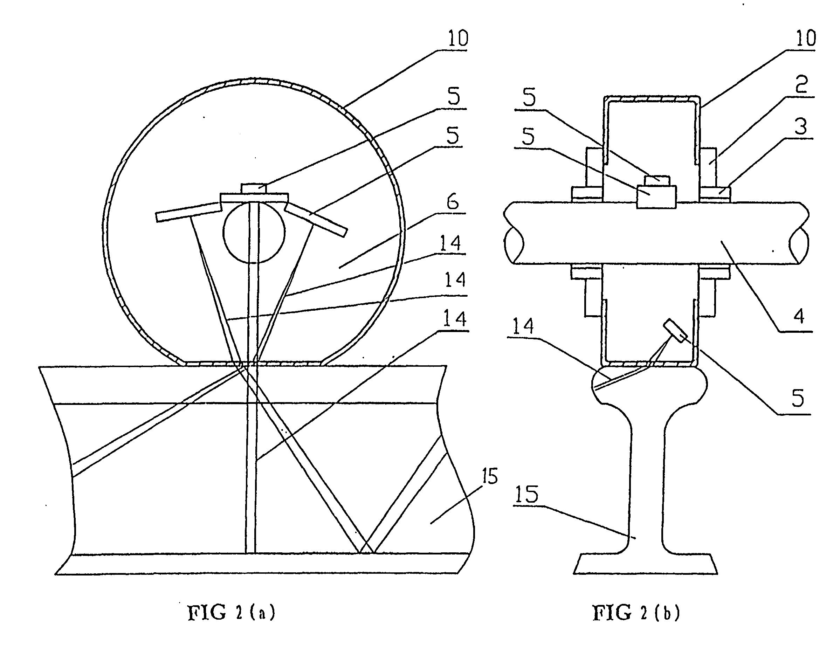

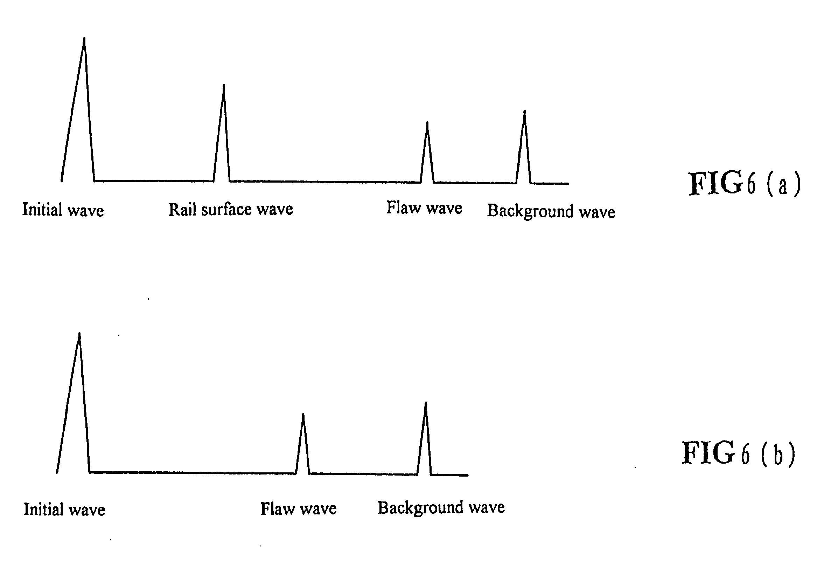

In the technical fields in which it is necessary to ensure high safety and high reliability, such as industries of defense, aero-space and railway communications, nondestructive flaw detection methods are broadly used in detecting various flaws possibly present in key elements or units. In the field of railway communications, the nondestructive flaw detection system should have high detecting precision and high detecting rate, and, at present, a wheel-type system that can continuously detect rail flaws is generally adopted. US patent No. 4,487,071 disclosed such a flaw detection system which includes, as shown in Fig. 1, wheel transducers 1, detecting supports 7, guiding wheels 8 for guiding the detecting supports and detecting support links 9 which fix the detection system on a flaw detection car 13. Each of the wheel transducers 1 comprises a tire 10 made of sound wave permeable thin rubber and filled with coupling fluid 6 for transmitting sound wave, as shown in Fig. 2(a) and 2(b). The wheel transducer 1 further comprises probes 5 functioning as ultrasonic emitter/receiver. When detecting flaws, the probes 5 continuously emit ultrasonic pulse beams 14, which pass through the coupling fluid 6 and the tire 10 into the rail 15 to be detected. If no flaw is present in the rail, the beams 14 arrive at the bottom surface of the rail and are reflected to the probes, resulting in a background wave. If there is a flaw in the rail, a flaw wave is obtained before the background wave (as shown in Fig. 6(a)). The probes 5 receive the reflected echo signal and deliver it to a processing unit 12, which outputs continuous detection results.

However, said flaw detection system has the following main disadvantages. Firstly, because the distance from the probes to the rail is relatively long, and the sound wave's propagation velocity in the coupling fluid is relatively small (approximately 1/5 of that in steel), the sound wave is delayed and when the detecting rate increases, the echo wave will progressively drop behind for a certain distance and cannot be received correctly by the probes, which results in signal missing. Secondly, when the wheel transducer having thin-wall tire and internal coupling fluid rotates in high speed, the viscosity, the inertia of the internal coupling fluid and the weak elasticity of the external wall of the thin rubber tire lead to interfering force, and, as results, the wheel transducer cannot retain a planar coupling surface which is necessary for detecting operation. Accordingly, the emitting and reflecting of the ultrasonic sound wave are cumbered, or interfering reflecting surfaces occur, and the missing echo signals and interfering waves increase. Finally, in order to avoid vibrating of the wheel transducer, the detecting support must be very heavy (typically > 1 ton) and very solid. Accordingly, when the detecting support moves in high speed, the great inertia force makes the detecting support not so easy to be guided and apt to derail, and, in turn, apt to be blocked under the detection car, which influences severely the running safety.

### Summary of the Invention

Therefore, an object of the invention is to provide an ultrasonic flaw detection method for detecting rail flaws using wheel transducers, as well as the wheel transducer and the flaw detection system for implementing the method, so that the echo signals are received correctly even in high speed flaw detection, with the missing echo signals significantly reduced, the interfering waves lowered, and the running safety considerably improved.

According to a first aspect of the invention, an ultrasonic flaw detection method for detecting rail flaws using wheel transducers according to claim 1 is provided.

According to a second aspect of the invention, an ultrasonic wheel transducer for detecting rail flaws according to claim 2 for implementing the above method is provided.

The means for reducing friction may be formed as follows: jetting holes are formed in the sliding plate, and when detecting flaws, coupling fluid of high pressure is jetted out of the jetting holes and forms a thin fluid film between the sliding plate and the wall of the tire of the wheel transducer. Said means for reducing friction may also be comprised of rollers or balls mounted on the sliding plate, said rollers or balls being pressed against the wall of the tire of the wheel transducer. The means for reducing friction may still also be as such: necessary small gap is maintained constantly between the sliding plate and the wall of the tire of the wheel transducer by means of automatic control techniques, so that the wheel transducer rolls smoothly on the rail.

According to a third aspect of the invention, it is provided a wheel-type ultrasonic flaw detection system for detecting rail flaws according to claim 12 for implementing said method.

According to the above solutions, the ultrasonic wave beam directly passes through the solid sliding plate into the rail, so that the delay of the ultrasonic wave occurring when using coupling fluid is considerably reduced, and the echo signals are received correctly even in high speed detection. Additionally, since the coupling surface necessary for detecting is formed by the wheel transducer's tire which is compelled by the sliding plate to flat press on the surface of the rail to be detected, the coupling surface can be kept planar even in high speed detection, so that the opportunities of missing echo signals and appearing interfering waves are eliminated, at least reduced. Moreover, according to the invention, the detecting support is no longer necessary and running safety is improved significantly.

### Brief Description of the Drawings

Fig. 1 is a schematic view of a wheel-type flaw detection system for detecting rail flaws in the prior art;
Fig. 2(a) and 2(b) are respectively the front view and side view of the flaw detection system shown in Fig. 1;
Fig. 3 is a schematic view of an ultrasonic flaw detection system for detecting rail flaws according to one embodiment of the invention, which is mounted on a detection car;

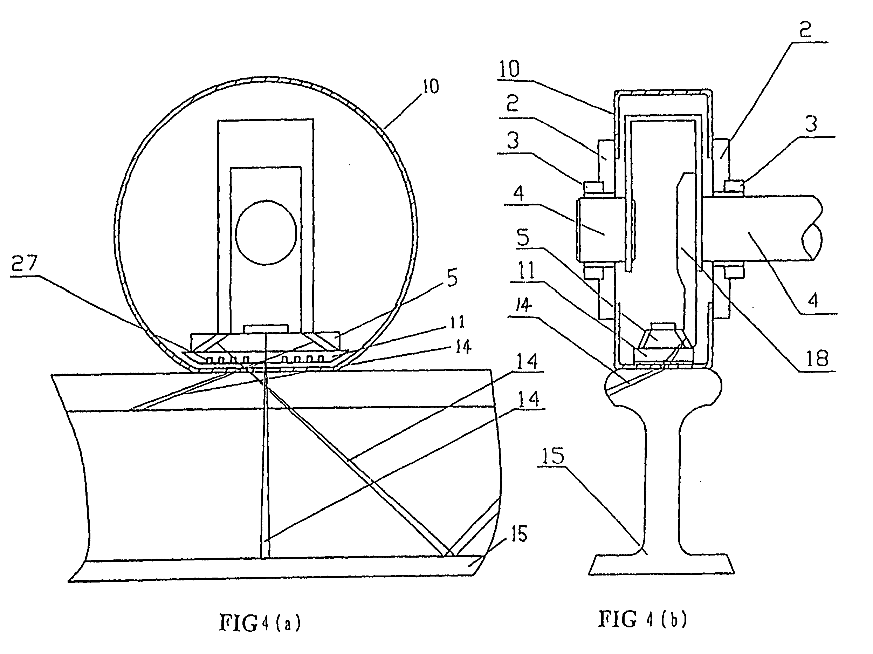

Fig. 4(a) and 4(b) are respectively the front view and side view of an ultrasonic wheel transducer for detecting rail flaws according to the invention;
Fig. 5 is a partial schematic view of an ultrasonic flaw detection system for detecting rail flaws according to one embodiment of the invention;
Fig. 6(a) is a schematic oscillogram for illustrating the principle of the ultrasonic flaw detection system for detecting rail flaws;
Fig. 6(b) is a schematic oscillogram for illustrating one example of the invention.

### Detailed Description of Preferred Embodiments of the Invention

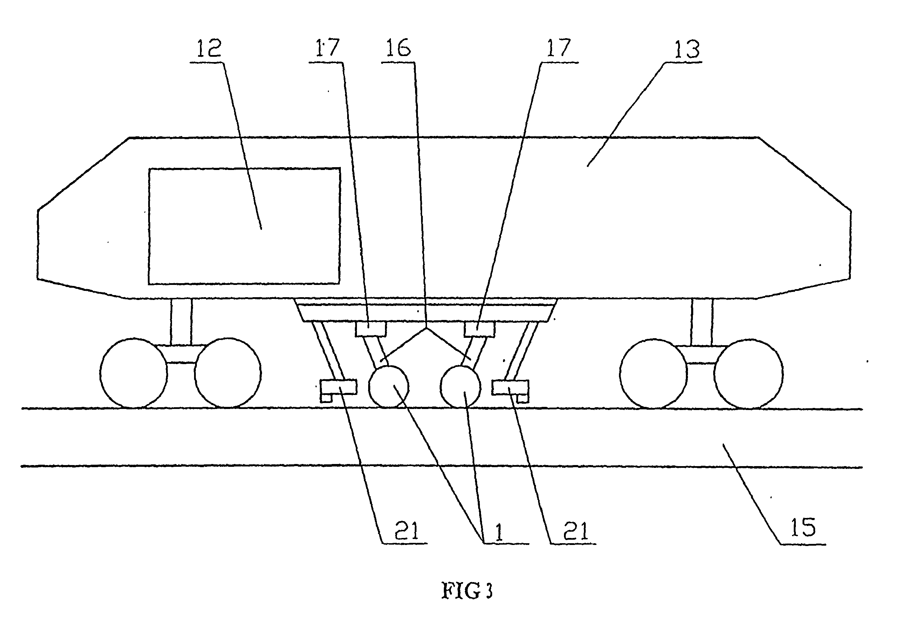

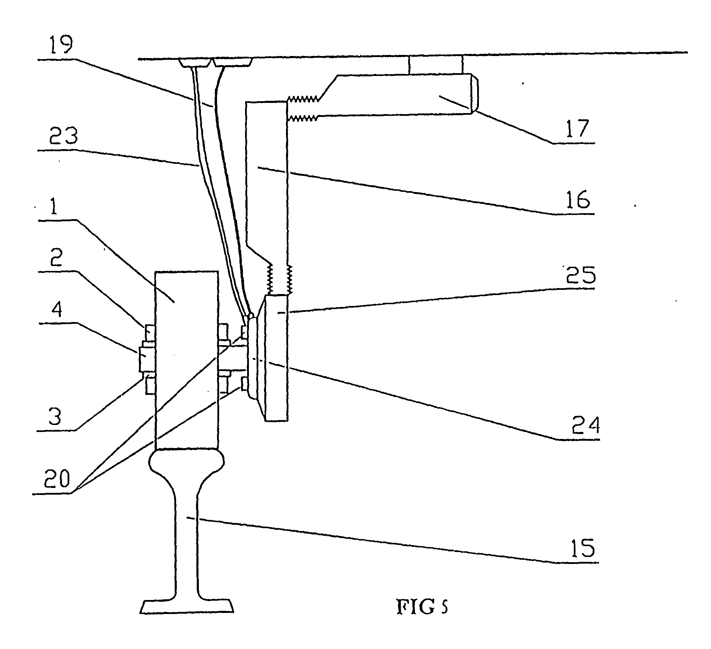

Now referring to Fig.3, the ultrasonic flaw detection system for detecting rail flaws according to the invention comprises four wheel transducers 1 of the invention. When mounted on a detection car 13, two of the wheel transducers are positioned on one rail, and the other two of the wheel transducers are positioned on another rail. Each of the wheel transducers 1 is associated to the detection car 13 through a fixing base 25, an automatic elevating servo mechanism 16 and an automatic centering servo mechanism 17 (as shown in Fig.5).

The wheel transducer 1 comprises an annular tire 10 made of ultrasonic wave permeable thin rubber and is mounted on the rotating axle 3 of the wheel transducer through its hub 2. The tire 10 is preferably made of synthesized ultrasonic wave permeable rubber of the type of polyamine. To reduce the waste of ultrasonic wave, it is necessary to make the tire wall very thin. On the inner flange of the hub 2 is disposed a seal ring to prevent the coupling fluid from leaking. In the wheel transducer 1, a rigid sliding plate is mounted on a pressing assembly 18, which is in turn fixed on the fixed axle 4 of the wheel transducer. On one side of the sliding plate 11 opposite to the tire wall are mounted probes 5 functioning as ultrasonic emitter/receiver. The emission of the probes is oriented to the detecting surface of the wheel wall. One vertical probe is sufficient for detecting horizontal flaws or pore flaws, etc. As to complex flaws, more probes are necessary to detect transversal and longitudinal flaws. Therefore, to improve the reliability of flaw detection, each sliding plate can be equipped with probes along three dimensions so that horizontal, longitudinal and transversal flaws could be detected simultaneously. Furthermore, as the sliding plate is relatively long, a plurality of groups of probes may be mounted on it, so that not only the reliability of flaw detection is improved, but also the following problem is solved: different probes disposed slantwise in same wheel transducer are unable to emit/receive ultrasonic wave beams between each other. Therefore, the flaw detection may be realized by a single wheel transducer. While detecting, the pressing assembly 18 passes very high pressure to the sliding plate 11, which compels the thin tire wall of the wheel transducer to flat press on the surface of the rail 15 to be detected, so that the probes 5 are coupled directly with the rail surface through the thin tire wall made of ultrasonic wave permeable rubber, without any ultrasonic wave delay within the wheel transducer. In the sliding plate 11 are distributed fluid jetting holes 27, which are connected through conduits to a pipe 23 supplying high pressure coupling fluid. In flaw detection, high pressure coupling fluid is jetted from the fluid jetting holes 27 so as to form a fluid film between the sliding plate 11 and the tire wall, so that the sliding plate is floated over the tire wall, the resistance being small. In this way, the sliding plate presses the tire wall flat and floats on it, which ensures the reliable coupling and smoothness of the wheel transducer 1. At the same time, the uniformity of fluid floating force can completely eliminate the warping of the coupling surface that may be caused by the non-uniform elasticity of the tire wall, and eliminate undesired reflecting surfaces that may generate interfering waves while detecting in high speed, so that the emitting and receiving of the ultrasonic waves are smooth and the signals obtained are stable.

The sliding plate 11 is made of stainless steel. On the side pressing against the tire wall, the two ends of the sliding plate in the running direction of the detection car are preferably tapered in the form of an upward arc, so that the thin wall tire 10 rotates smoothly and has its passing ability on rails improved. Moreover, the distribution of the fluid jetting holes in the sliding plate 11 is preferably determined based on the distribution of the interaction force between the tire wall of the wheel transducer and the sliding plate. In particular, when the sliding plate slides, the non-uniformity of the interaction force between the tire wall of the wheel transducer and the sliding plate results in the sliding plate suffering relatively great resistance at its two ends in the running direction. Accordingly, said two ends may be provided with fluid jetting holes with relatively high density.

Now referring to Fig. 5, the automatic elevating servo mechanism 16 and the pressing assembly 18 are used together to lift or lower the wheel transducer 1, and to apply pressure on the rail 15. Within said mechanism and assembly there are provided sensors for sensing velocity, pressure and position and regulators. The pressing assembly 18 adjusts the pressure applied on the sliding plate to be proportional to the detecting velocity. Said mechanism and assembly can automatically adjust and compensate the variations in pressure and vertical positions of the wheel transducer and the sliding plate caused by the up-and-downs of the rail, and ensure that the wheel transducer and the sliding plate should not vibrate and couple with the rail surface with high reliability during full-speed detection. Alternatively, the pressing assembly 18 may be omitted and the sliding plate 11 may be fixed directly on the fixed axle of the wheel transducer 1. As shown in Fig. 3, during flaw detection, the automatic elevating servo mechanism 16 is preferably slanted in the running direction of the detection car, so that the wheel transducers may be operated in two dimensions and the distance between the two wheel transducers on same rail may be adjusted automatically. In this way, the wave beam emitting/receiving of a pair of tilted probes among the combined probes of the sliding plates of the two wheel transducers may be matched with each other. If said emitting and receiving are matched correctly, the amplitude of received echo signal is the largest. Said echo signal is delivered to the automatic elevating servo mechanism 16 so that the latter automatically locks the distance between wheels in real time.

Some probes of the combined probes 5 are dedicated to detecting the flaws in the rail web and the pore flaws in the bolts used in the rail. If the positions of the probes shift, said important signals will be missed. The automatic centering servo mechanism 17 continuously detects the signals of the vertical probes of the combined probes. When the vertical probes are positioned in the middle, the wave beam passes successfully through the web to the rail bottom, and the amplitude of the reflected echo wave is the largest. When the probes shift even slightly, the adjusting means provided in the automatic centering servo mechanism 17 will adjust the wheel transducer to and lock it in the middle position in real time according to the variation of the amplitude of the echo wave, and the high precise auto-tracking of the wheel transducer is ensured. Alternatively, the automatic centering servo mechanism 17 may be omitted and replaced by manual centering.

As shown in Fig. 5, the fixed axle base 24 of wheel transducer and the fixing base 25 of the automatic elevating servo mechanism are fixed using bolts 20 with predetermined tension. An auto-retracting cable wire 19 connects the fixed axle base 24 of the wheel transducer to the detection car. When the wheel transducer suffers unexpected impact, if the impact force exceeds said predetermined tension of said bolts 20, said bolts 20 will break automatically and the auto-retracting cable wire 19 will pull the instantly fallen wheel transducer up to the bottom of the detection car, guaranteeing the running safety. After the wheel transducer has fallen off, the fixing base on the automatic elevating servo mechanism remains perfect, on which spare wheel transducer can be mounted again. Therefore, the ultrasonic flaw detection system for detecting rail flaws of the invention also provides the assembly with the capability of being repaired in field. Furthermore, protecting plates 21 (as shown in Fig. 3) may be provided for keeping the fallen wheel transducer out of the rail, improving the running safety further.

Table 1 illustrates the main specifications of the ultrasonic flaw detection system for detecting rail flaws according to the invention, compared with those of the flaw detection system disclosed in U.S. patent No. 4,487,071.

**Table. 1**

| | THE INVENTION | U.S. PATENT NO. 4,487,071 |
|---|---|---|
| DETECTING RATE | ≥80km/h | ≤40km/h |
| REPEATING FREQUENCY OF ULTRASONIC PULSE | 500-5000/s | 500-2000/s |
| TIME FOR FLAW DISTINGUISHING | ≤200 microseconds | ≤400 microseconds |
| ADJUSTING PRECISION OF AUTO-SERVO MECHANISM IN ALL DIRECTIONS | ≤1mm | NONE |
| AUTO-TRACKING ON RAIL | YES | NO |
| TYPES OF FLAWS DISTINGUISHABLE | Core Flaw and Fracture of Bolt Hole | Fracture of Bolt Hole, but poor for core flaw detecting |
| PROTECTING DEVICE | YES | NO |

The following is the process of a high speed rail flaw detection using the ultrasonic flaw detection system for detecting rail flaws according to the invention. The automatic elevating servo mechanism 16 puts down the wheel transducer 1 on the rail 15. The pressing assembly 18 applies pressure on the sliding plate 11 within the wheel transducer 1 and compels the coupling surface of the wheel wall to flat press on the rail surface. The pipe 23 supplying high pressure coupling fluid supplies high pressure fluid to the fluid jetting holes 27 in the sliding plate 11 and makes the latter floated. The probes 5 functioning as ultrasonic emitter/receiver emit ultrasonic pulses. The automatic elevating servo mechanism 16 adjusts automatically the distance between the two wheel transducers on same rail, making a pair of detecting pulses of the two wheel transducers matched with each other. The centering servo mechanism 17 adjusts the middle position of the probes 5 functioning as ultrasonic emitter/receiver to make the wheel transducer positioned in the middle. So far, the flaw detection system is ready to work. While detecting, the detection car 13 moves, the flaw detection system is controlled automatically by a computer, and the pressure applied by the sliding plate and the frequency of the continuously emitted ultrasonic pulses are proportional to the detecting rate to obtain desired detecting precision. Each time the probes 5 functioning as ultrasonic emitter/receiver emit a pulse, the computer analyzes the echo wave instantly, distinguishes the type of the flaw, the depth and the size of the flaw, and, together with velocity/distance sensors, determines the position of the flaw. If the transducer suffers undesired impact, the bolts 20 with predetermined tension will break automatically, the protecting plates will keep the fallen wheel transducer out, and the auto-retracting cable wire 19 will pull the fallen wheel transducer up, so that the running safety is guaranteed.

Some test results are given below about the ultrasonic sound wave flaw detection system for detecting rail flaws according to the invention.

The ultrasonic wave flaw detection system for detecting rail flaws according to the invention is mounted on a support, and the wheel transducers are placed on a rail formed as a circle with a diameter of 3 m. In the web of the rail is drilled a pore with diameter of 3mm, and the circular rail moves in a linear velocity of 0-80 km/h. With such velocity of the circular rail, the detecting computer can always give out an oscillogram of flaw echoes as shown in Fig. 6(b).

## Claims

1. An ultrasonic flaw detection method for detecting rail flaws using wheel transducers (1) comprising at least a tire (10) made of ultrasonic wave permeable materials, comprising the steps of:
- compelling the wall of the tire of the wheel transducer to flat press on the surface of the rail (15) to be detected,
- supplying high pressure compiling fluid though a sliding plate (11) mounted in and fixed to the wheel transducer so as to form a fluid film between the sliding plate and the wall of the tire of the wheel transducer,
- generating continuous ultrasonic pulse beams by probes (5) functioning as ultrasonic emitter/receiver and mounted on the sliding plate, and
- detecting the echo signals of said beams reflected from the rail and processing said echo signals to determine whether there is any flaw in the rail.

2. An ultrasonic wheel transducer for detecting rail flaws for implementing the method according to claim 1, comprising a tire (10) made of ultrasonic wave permeable materials and probes (5) functioning as ultrasonic emitter/receiver **characterized in that** the wheel transducer (1) further comprises:
a sliding plate (11) fixed to the fixed axle (4) of the wheel transducer, said probes functioning as ultrasonic emitter/receiver being mounted on the sliding plate, and, in course of flaw detection, the sliding plate compelling the wall of the tire of the wheel transducer to flat press on the surface of the rail (15) to be detected; and
means for reducing friction between the sliding plate and the wall of the tire of the wheel transducer in course of flaw detection.

3. An ultrasonic wheel transducer for detecting rail flaws according to claim 2, **characterized in that**, the wheel transducer further comprises a pressing assembly (18), said sliding plate being fixed to the fixed axle of wheel transducer through said pressing assembly.

4. An ultrasonic wheel transducer for detecting rail flaws according to claim 3, **characterized in that**, within said pressing assembly there are provided sensors for sensing velocity, pressure and position and regulators, for adjusting the pressure applied on the sliding plate to be proportion at to the detecting velacity.

5. An ultrasonic wheel transducer for detecting rail flaws according to claim 2, **characterized in that**, said means for reducing friction comprises jetting holes (27) formed in the sliding plate (11), and, while detecting flaw, coupling fluid of high pressure is jetted out of the jetting holes and forms a thin fluid film between the sliding plate and the wall of the tire of the wheel transducer.

6. An ultrasonic wheel transducer for detecting rail flaws according to claim 5, **characterized in that**, the distribution of the fluid jetting holes (27) in the sliding plate (11) is determined based on the distribution of the interaction force between the tire wall of the wheel transducer and the sliding plate.

7. An ultrasonic wheel transducer for detecting rail flaws according to claim 2, **characterized in that**, said means for reducing friction comprises rollers or balls mounted on the sliding plate, said rollers or balls being pressed against the wall of the tire of the wheel transducer.

8. An ultrasonic wheel transducer for detecting rail flaws according to claim 2, **characterized in that**, said means for reducing friction comprises necessary small gap between the sliding plate and the wall of the tire of the wheel transducer, maintained constant by means of automatic control means so that the wheel transducer rolls smoothly on the rail.

9. An ultrasonic wheel transducer for detecting rail flaws according to claim 2, **characterized in that**, said sliding plate is rigid.

10. An ultrasonic wheel transducer for detecting rail flaws according to claim 2, **characterized in that**, said sliding plate is tapered in the form of an upward arc on the side pressing against the wall of the tire, as its two ends in the running direction of the detection car, so that the wheel transducer rolls smoothly and the wheel transducer's passing ability on rails is improved.

11. An ultrasonic wheel transducer for detecting rail flaws according to claim 2, **characterized in that**, said tire of the wheel transducer is made of synthesized ultrasonic wave permeable runner of the type of polyamine.

12. A wheel-type ultrasonic flaw detection system for detecting rail flaws for implementing the method according to claim 1, comprising fixing means for mounting the system on the body of detection car (13) and elevating means (16) associated with the fixing means, **characterized in that,** the system further comprises at least one wheel transducer (1) according to claim 2, said wheel transducer being mounted on said elevating means through a fixing base (25) of said elevating means.

13. A wheel-type ultrasonic flaw detection system for detecting rail flaws according to claim 12, **characterized in that**, said wheel transducer is associated with said fixing base of said evaluating through bolts (20) with predetermined tension, and the system further comprises an auto retracting cable wire (10) associated with said wheel-transducer, wherein, when the wheel transducer suffers unexpected impact, said bolts will break automatically and the auto-retracting cable wire will pull the fallen wheel transducer up if the impact force exceeds said predetermined tension of said bolts.

14. A wheel-type ultrasonic flaw detection system for detecting rail flaws according to claim 13, **characterized in that**, the system further comprises protecting plates (21) for keeping said fallen wheel transducer out of the rail.

15. A wheel-type ultrasonic flaw detection system for detecting rail flaws according to claim 12, **characterized in that**, said fixing means includes an automatic centering servo mechanism (17) for locking said wheel transducer in the middle position in real time and realizing the high precise auto-tracking of the wheel transducer on the rail.

16. A wheel-type ultrasonic flaw detection system for detecting rail flaws according to claim 12, **characterized in that**, said elevating assembly includes an automatic elevating servo mechanism (16) for auto-adjusting and compensating the variations in pressure and in vertical position of the wheel transducer (1) and the sliding plate (11) caused by the up-and-downs of the rail during high speed detecting.

17. A wheel-type ultrasonic flaw detection system for detecting rail flaws according to claim 16, **characterized in that**, said automatic elevating servo mechanism is slanted in the running direction of the detection car, so that the wheel transducer may be operated in two dimensions.

## Patentansprüche

1. Ultraschall-Fehlererkennungsverfahren zur Erkennung von Schienenfehlern unter Verwendung von Rad-Meßwandlern (1), die zumindest einen Reifen (10) umfassen, der aus Materialien besteht, die für Ultraschallwellen durchlässig sind, umfassend die folgenden Schritte:
- Zwingen der Wand des Reifens des Rad-Meßwandlers, sich flach an die Fläche der Schiene (15), an der die Erkennung erfolgen soll, zu pressen,
- Liefern eines Hochdruck-Kopplungsfluids durch eine Gleitplatte (11), die im Rad-Meßwandler angebracht und daran fixiert ist, um zwischen der Gleitplatte und der Wand des Reifens des Rad-Meßwandlers einen Fluidfilm zu bilden,
- Erzeugen von fortlaufenden Ultraschallimpulsstrahlen durch Sonden (5), die als Ultraschallstrahler/-empfänger wirken und an der Gleitplatte angebracht sind, und
- Feststeller der Echosignale dieser Strahlen, die von der Schiene reflektiert werden, und Verarbeiten der Echosignale, um zu bestimmen, ob in der Schiene irgendein Fehler vorhanden ist.

2. Ultraschall-Rad-Meßwandler zur Erkennung von Schienenfehlern, um das Verfahren nach Anspruch 1 auszuführen, umfassend einen Reife (10), der aus Materialien, die für Ultraschallwellen durchlässig sind, besteht, und Sonden (5), die als Ultraschallstrahler/-empfänger wirken, **dadurch gekennzeichnet, daß** der Rad-Meßwandler (1) ferner folgendes umfaßt:
eine Gleitplatte (11), die an der festen Achse (4) des Rad-Meßwandlers fixiert ist, wobei die Sonden, die als Ultraschallstrahler/-empfänger wirken, an der Gleitplatte angebracht sind, und wobei die Gleitplatte im Verlauf der Fehlererkennung die Wand des Reifens des Rad-Meßwandlers dazu zwingt, sich flach an die Fläche der Schiene (15), an der die Erkennung erfolgen soll, zu pressen, und
Mittel zur Verringerung der Reibung zwischen der Gleitplatte und der Wand des Reifens des Rad-Meßwandlers im Verlauf der Fehlererkennung.

3. Ultraschall-Rad-Meßwandler zur Erkennung von Schienenfehlern nach Anspruch 2, **dadurch gekennzeichnet, daß** der Rad-Meßwandler ferner einen Preßaufbau (18) umfaßt, wobei die Gleitplatte durch den Preßaufbau an der festen Achse des Rad-Meßwandlers fixiert ist.

4. Ultraschall-Rad-Meßwandler zur Erkennung von Schienenfehlern nach Anspruch 3, **dadurch gekennzeichnet, daß** im Preßaufbau Sensoren zur Erfassung der Geschwindigkeit, des Druckes und der Position und Regler zur derartigen Regulierung des Drucks, der auf die Gleitplatte ausgeübt wird, daß dieser zur Erkennungsgeschwindigkeit proportional ist, bereitgestellt sind.

5. Ultraschall-Rad-Meßwandler zur Erkennung von Schienenfehlern nach Anspruch 2, **dadurch gekennzeichnet, daß** die Mittel zur Verringerung der Reibung Ausstoßöffnungen (27) umfassen, die in der Gleitplatte (11) gebildet sind, und daß während der Fehlererkennung ein Kopplungsfluid mit hohem Druck aus den Ausstoßöffnungen ausgestoßen wird und zwischen der Gleitplatte und der Wand des Reifens des Rad-Meßwandlers einen dünnen Fluidflim bildet.

6. Ultraschall-Rad-Meßwandler zur Erkennung von Schienenfehlern nach Anspruch 5, **dadurch gekennzeichnet, daß** die Erteilung der Fluidausstoßöffnungen (27) in der Gleitplatte (11) auf Basis der Verteilung der Wechselwirkungskraft zwischen der Reifenwand des Rad-Meßwandlers und der Gleitplatte bestimmt ist.

7. Ultraschall-Rad-Meßwandler zur Erkennung von Schienenfehlern nach Anspruch 2, **dadurch gekennzeichnet, daß** die Mittel zur Verringerung der Reibung Rollen oder Kugeln umfassen, die an der Gleitplatte angebracht sind, wobei die Rollen oder Kugeln gegen die Wand des Reifens des Rad-Meßwandlers gepreßt werden.

8. Ultraschall-Rad-Meßwandler zur Erkennung von Schienenfehlern nach Anspruch 2, **dadurch gekennzeichnet, daß** die Mittel zur Verringerung der Reibung einen hinreichend kleinen Abstand zwischen der Gleitplatte und der Wand des Reifens des Rad-Meßwandlers aufweisen, der durch ein automatisches Steuermittel konstant gehalten wird, so daß der Rad-Meßwandler glatt auf der Schiene rollt.

9. Ultraschall-Rad-Meßwandler zur Erkennung von Schienenfehlern nach Anspruch 2, **dadurch gekennzeichnet, daß** die Gleitplatte starr ist.

10. Ultraschall-Rad-Meßwandler zur Erkennung von Schienenfehlern nach Anspruch 2, **dadurch gekennzeichnet, daß** die Gleitplatte an der Seite, die gegen die Wand des Reifens preßt, wie auch an ihren beiden Enden in der Laufrichtung des Erkennungsfahrzeugs in der Form eines aufwärts gerichteten Bogens verjüngt ist, so daß der Rad-Meßwandler glatt rollt und die Fähigkeit des Rad-Meßwandlers, über Schienen zu verlaufen, verbessert ist.

11. Ultraschall-Rad-Meßwandler zur Erkennung von Schienenfehlern nach Anspruch 2, **dadurch gekennzeichnet, daß** der Reifen des Rad-Meßwandlers aus einem synthetischen für Ultraschallwellen durchlässigen Läufer vom Polyamidtyp besteht.

12. Ultraschall- Fehlererkennungssystem vom Radtyp zur Erkennung von Schienenfehlern, um das Verfahren nach Anspruch 1 auszuführen, umfassend Fixiermittel zur Anbringung des Systems am Körper eines Erkennungsfahrzeugs (13) und Hebemittel (16), die mit den Fixierungsmitteln verbunden sind, **dadurch gekennzeichnet, daß** das System ferner mindestens einen Rad-Meßwandler (1) nach Anspruch 2 umfaßt, wobei der Rad-Meßwandler durch eine Fixierbasis (25) des Hebemittels am Hebemittel angebracht ist.

13. Ultraschall-Fehlererkennungssystem vom Radtyp zur Erkennung von Schienenfehlern nach Anspruch 12, **dadurch gekennzeichnet, daß** der Rad-Meßwandler durch Schrauben (20) mit einer vorbestimmten Spannung mit der Fixierbasis des Hebemittels verbunden ist, und das System ferner einen Kabeldraht (10) für ein automatisches Zurückziehen umfaßt, der mit dem Rad-Meßwandler verbunde ist, wobei die Schrauben automatisch brechen werden, wenn der Rad-Meßwandler einen unerwarteten Stoß erleidet, und der Kabeldraht für ein automatisches Zurückziehen den abgefallenen Rad-Meßwandler hochziehen wird, wenn die Stoßkraft die vorbestimmte Spannung der Schrauben übersteigt.

14. Ultraschall-Fehlererkennungssystem vom Radtyp zur Erkennung von Schienenfehlern nach Anspruch 13, **dadurch gekennzeichnet, daß** das System ferner Schutzplatten (21) umfaßt, um den abgefallenen Rad-Meßwandler von der Schiene fern zu halten.

15. Ultraschall-Fehlererkennungssystem vom Radtyp zur Erkennung von Schienenfehlern nach Anspruch 12, **dadurch gekennzeichnet, daß** das Fixiermittel einen Servomechanismus (17) für eine automatische Zentrierung beinhaltet, um den Rad-Meßwandler in Echtzeit in der Mittelposition zu sperren und das hochgenaue automatische Nachführen des Rad-Meßwandlers auf der Schiene auszuführen.

16. Ultraschall-Fehlererkennungssystem vom Radtyp zur Erkennung von Schienenfehlern nach Anspruch 12, **dadurch gekennzeichnet, daß** der Hebeaufbau einen automatischen Hebeservomechanismus (16) beinhaltet, um die Schwankungen des Drucks und der senkrechten Position des Rad-Meßwandlers (1) und der Gleitplatte (11), die durch das Auf- und Absteigen der Schiene während der Hochgeschwindigkeitserkennung verursacht werden, automatisch zu regulieren und auszugleichen.

17. Ultraschall-Fehlererkennungssystem vom Radtyp zur Erkennung von Schienenfehlern nach Anspruch 16, **dadurch gekennzeichnet, daß** der automatische Hebeservomechanismus in der Laufrichtung des Erkennungsfahrzeugs geneigt ist, so daß der Rad-Meßwandler in zwei Dimensionen betrieben werden kann.

## Revendications

1. Procédé de détection ultrasonore de défauts destiné à détecter des défauts de rails en utilisant des transducteurs d'essieux (1) comprenant au moins un pneumatique (10) composé de matériaux perméables aux ondes ultrasonores, comprenant les étapes consistant à :
- contraindre la paroi du pneumatique du transducteur d'essieu afin d'appuyer à plat sur la surface du rail (15) à détecter,
- fournir un fluide de contrainte à haute pression par le biais d'une sole de plissement (11) montée dans et fixée sur le transducteur d'essieu de façon à former un film de fluide entre la sole de glissement et la paroi du pneumatique du transducteur d'essieu,
- générer des faisceaux d'impulsions ultrasonores continus à l'aide de sondes (5) fonctionnant comme un émetteur/récepteur ultrasonore et montrées sur la sole de glissement,
et
- détecter les signaux d'écho desdits faisceau réfléchis par le rail et traiter lesdits signaux d'écho afin de déterminer si il existe un défaut dans le rail.

2. Transducteur d'essieu ultrasonore destiné à détecter des défauts de rails permettant de mettre en oeuvre le procédé selon la revendication 1, comprenant un pneumatique (10) composé de matériaux perméables aux ondes ultrasonores et des sondes (5) fonctionnant comme un émetteur/récepteur ultrasonore, **caractérisé en ce que** le transducteur d'essieu (1) comprend en outre :
une sole de glissement (11) fixée sur l'essieu fixe (4) du transducteur d'essieu, lesdites sondes fonctionnant comme un émetteur/récepteur ultrasonore monté sur la sole de glissement, et, pondant une détection de défauts, la sole de glissement contraignant la paroi du pneumatique du transducteur d'essieu de façon à appuyer à plat sur la surface du rail (15) à détecter ; et
un moyen de réduction du frottement entre la sole de glissement et la paroi du pneumatique du transducteur d'essieu pendant une détection de défaut.

3. Transducteur d'essieu ultrasonore destiné à détecter des défauts de rails selon la revendication 2, **caractérisé en ce que** le transducteur d'essieu comprend en outre un ensemble de pression (18), ladite sole de glissement étant fixée sur l' essieu fixe du transducteur d'essieu par le biais dudit ensemble de pression.

4. Transducteur d'essieu ultrasonore destiné à détecter des défauts de rails selon la revendication 3, **caractérisé en ce que,** dans ledit ensemble de pression, sont prévus des capteurs destinés à détecter la vitesse, la pression et la position et des régulateurs, afin d'ajuster la pression appliquée sur la sole de glissement de façon à ce qu'elle soit proportionnelle à la vitesse détectée.

5. Transducteur d'essieu ultrasonore destiné à détecter des défauts de rails salon la revendication 2, **caractérisé en ce que** ledit moyen de réduction du frottement comprend des trous de turbulence (27) formés dans la sole de glissement (11), et, pendant le détection d'un défaut, un fluide de couplage à haute pression est expulsé des trous de turbulence et forme un film de fluide mince entre la sole de glissement et la paroi du pneumatique du transducteur d'essieu.

6. Transducteur d'essieu ultrasonore destiné à détecter des défauts de rails selon la revendication 5, **caractérisé en ce que** la répartition des trous de turbulence de fluide (27) dans la sole de plissement (11) est déterminée sur la base de la répartition de la force d'interaction entre la paroi du pneumatique du transducteur d'essieu et la solde de glissement.

7. Transducteur d'essieu ultrasonore destiné à détecter des défauts de rails selon la revendication 2, **caractérisé en ce que** ledit moyen de réduction du frottement comprend des galets ou des billets monté(e)s sur la sole de glissement, lesdits galets ou lesdites billes étant appuyé(e)s contre la paroi du pneumatique du transducteur d'essieu.

8. Transducteur d'essieu ultrasonore destiné à détecter des défauts de rails selon la revendication 2, **caractérisé en ce que** ledit moyen de réduction du frottement comprend un espace de petite taille nécessaire entre la sole de glissement et la paroi du pneumatique du transducteur d'essieu, maintenu constant à l'aide du moyen de commande automatique afin que le transducteur d'essieu roule de manière homogène sur le rail.

9. Transducteur d'essieu ultrasonore destiné à détecter des défauts de rails selon la revendication 2, **caractérisé en ce que** ladite sole de glissement est rigide.

10. Transducteur d'essieu ultrasonore destiné à détecter des défauts de rails selon la revendication 2, **caractérisé en ce que** ladite sole de glissement est effilés sous la forme d'un arc vertical sur le côté appuyant contre la paroi du pneumatique, en tant que ses deux extrémités dans la direction de fonctionnement de la cabine de détection, afin que le transducteur d'essieu roule de manière homogène et que la capacité de passage sur les rails du transducteur d'essieu soit améliorée.

11. Transducteur d'essieu ultrasonore destiné à détecter des défauts de rails selon la revendication 2, **caractérisé en ce que** ledit pneumatique du transducteur d'essieu est composé d' un patin synthétique perméable aux ondes ultrasonores en polyamine.

12. Système de détection ultrasonore de défauts à essieu destiné à détecter des défauts de rails permettant de mettre en oeuvre le procédé selon la revendication 1, comprenant un moyen de fixation destiné à monter le système sur le corps de la cabine de détection (13) et un moyen d'élévation (16) associé au moyen de fixation, **caractérisé en ce que** le système comprend en outre au moins un transducteur d'essieu (1) selon la revendication 2, ledit transducteur d'essieu étant monté sur lendit moyen d'élévation par le biais d'une base de fixation (25) dudit moyen d'élévation.

13. Système de détection ultrasonore de défauts à essieu destiné à détecter des défauts de rails selon la revendication 12, **caractérisé en ce que** ledit transducteur d'essieu est associé à ladite base de fixation desdits boulons traversants d'évaluation (20) avec une tension prédéterminée, et le système comprend en outre un câble à auto-rétraction (10) associé audit transducteur d' essieu, dans lequel, lorsque le transducteur d'essieu subit un impact imprévu, lesdits boulons se cassent automatiquement et le câble à auto-rétraction tire le transducteur d'essieu qui est tombé si la force de l'impact dépasse ladite tension prédéterminée desdits boulons.

14. Système de détection ultrasonore de défauts à essieu destiné à détecter des défauts de rails selon la revendication 13, **caractérisé en ce que** le système comprend en outre des plaques de protection (21) destinées à maintenir ledit transducteur d'essieu qui est tombé en-dehors du rail.

15. Système de détection ultrasonore de défauts à essieu destiné à détecter des défauts de rails selon la revendication 12, **caractérisé en ce que** ledit moyen de fixation comprend un servomécanisme de centrage automatique (17) destiné à bloquer lendit transducteur d'essieu en position intermédiaire en temps réel et à réaliser le suivi automatique très précis du transducteur d'essieu sur le rail.

16. Système de détection ultrasonore de défauts à essieu destiné à détecter des défauts de rails melon la revendication 12, **caractérisé en ce que** ledit ensemble d'élévation comprend un servomécanisme d'élévation automatique (16) destiné à ajuster et à compenser automatiquement les variations de pression et de position Verticale du transducteur d'essieu (1) et de la sole de glissement (11) provoqués par les montées et les descentes du rail pendant une détection à grande vitesse.

17. Système de détection ultrasonore de défauts à essieu destiné à détecter des défauts de rails selon la revendication 16, **caractérisé en ce que** ledit servomécanisme d'élévation automatique est incliné dans la direction de fonctionnement de la cabine de détection, afin que le transducteur d'essieu puisse être utilisé en deux dimensions.
